(19) Europäisches Patentamt

European Patent Office

Office européen des brevets

(11) **EP 4 262 223 A1**

(12) # EUROPEAN PATENT APPLICATION
published in accordance with Art. 153(4) EPC

(43) Date of publication:
**18.10.2023 Bulletin 2023/42**

(21) Application number: **21907179.2**

(22) Date of filing: **17.12.2021**

(51) International Patent Classification (IPC):
*H04N 21/466* (2011.01)     *G06N 3/08* (2023.01)
*G06N 3/04* (2023.01)

(52) Cooperative Patent Classification (CPC):
**G06N 3/04; G06N 3/08; H04N 21/466**

(86) International application number:
**PCT/KR2021/019344**

(87) International publication number:
**WO 2022/131875 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.12.2020 KR 20200177068
16.12.2021 KR 20210180916**

(71) Applicant: **Harexinfotech Inc.**
**Seoul 06632 (KR)**

(72) Inventors:
• **PARK, Kyung Yang**
  **Seoul 03035 (KR)**
• **PARK, Jong Il**
  **Seoul 04376 (KR)**
• **LEE, Kyoung Jun**
  **Seoul 04424 (KR)**
• **HWANGBO, Yu Jeong**
  **Seoul 06601 (KR)**
• **JEONG, Baek**
  **Seoul 02466 (KR)**

(74) Representative: **Sander, Rolf**
**IPNY AB**
**Birger Jarlsgaten 99A**
**11356 Stockholm (SE)**

(54) **SERVER AND METHOD FOR PROVIDING PRODUCT RECOMMENDATION SERVICE BY USING PURCHASED ITEM INFORMATION**

(57)     The present disclosure relates to a server and a method for providing a product recommendation service by using purchased item information. The server for providing a product recommendation service by using purchased item information according to the present disclosure comprises: an input unit for collecting purchase information for each user; a memory in which a program for generating recommended product information for a target customer by using the purchase information for each user is stored; and a processor for executing the program, wherein the processor inquires about other customers with a purchase propensity similar to that of the target customer, and generates recommended product information to be recommended to the target customer in consideration of purchased items of other customers.

FIG. 7

1 CUSTOMER GAB
VISIT SHOPPING MALL

2 SEARCH FOR CUSTOMER 'EUL' MOST SIMILAR TO CUSTOMER A AMONG EXISTING CUSTOMERS WITHOUT USING GAB'S PERSONAL INFORMATION
· DERIVE CUSTOMER EUL WITH SIMILAR PURCHASE PATTERN USING GAB'S PURCHASE INFORMATION
· RECOMMEND PRODUCT THAT GAB DOES NOT PURCHASE AMONG PURCHASE INFORMATION OF 'EUL'

3 PROVIDE CUSTOMER GAB
WITH RELEVANT/NOVELTY

**Description**

**Technical Field**

The present disclosure relates to a server and method for providing a product recommendation service using purchased item information.

**Background Art**

In order to secure the performance of an artificial intelligence system according to the related art, a training process using a large amount of data is required.

For example, in providing product recommendation services to customers using the artificial intelligence system, when products are recommended using customer's personal information (gender, age, occupation, etc.), there is a problem in that personal privacy is not protected while acquiring customer's user information.

In addition, when a payment service provider wants to recommend a product based on a customer's payment history, different product code information is defined for each merchant. In order to recommend a product appropriately, it is necessary to integrate code information between merchants, which is unrealistic. Furthermore, when providing a payment service in the global market, it is difficult to provide an appropriate recommendation service in response to environmental elements with unique products for each country.

DISCLOSURE

Technical Problem

The present disclosure has been proposed to solve the above problems, and an object of the present disclosure provides a server and method for providing an appropriate product recommendation service to a target customer using purchase information of other customers with a high purchase similarity to the target customer, without using customer's personal information.

**Technical Solution**

A server for providing a product recommendation service using purchased product information according to an embodiment of the present disclosure includes: an input unit for collecting purchase information for each user; a memory in which a program for generating recommended product information for a target customer by using the purchase information for each user is stored; and a processor executing the program, in which the processor inquires about other customers with a purchase propensity similar to that of the target customer, and generates the recommended product information to be recommended to the target customer in consideration of purchased products of other customers.

The purchase information for each user may include purchased product, purchase destination, purchase time, and purchase location information.

The processor may inquire about other customers with similar purchase propensity by using an extrapolative collaborative filtering algorithm for the purchase information from a plurality of merchants.

The processor may build a matrix for the purchase information for each user, inquire about the other customers through a cosine similarity based on the target customer, and recommend products purchased by the other customers.

The processor may generate the recommended product information by detecting a similarity using vector-based extrapolative collaborative filtering.

The processor may learn the purchase information for each user as a sentence, obtain Product2vec obtained by vectorizing purchased product details, multiply a product vector to generate a user purchase propensity vector, and inquire about other customers with similar purchase propensity.

A method of providing a product recommendation service using purchased product information according to another embodiment of the present disclosure includes: (a) collecting purchase data according to purchase completion from a plurality of merchants; (b) searching for other customers with a high similarity to a purchase propensity of a target customer using the purchase data; and (c) recommending a product to the target customer using the purchased product information of the other customer.

In (a), the purchase data including purchased product, purchase destination, purchase time, and purchase location information may be collected.

In (b), the other customers may be searched using an extrapolative collaborative filtering algorithm.

In step (b), a matrix may be built for the purchase information for each user and the other customers with a high similarity to the purchase propensity may be searched based on the target customer.

In (b), the other customers may be searched using a vector-based extrapolative collaborative filtering algorithm.

In (b), the purchase data may be learned as a sentence to obtain Proudct2vec obtained by vectorizing purchased product details and the other customers may be searched by multiplying product vectors to generate a user purchase propensity vector.

**Advantageous Effects**

According to the present disclosure, it is possible to provide an appropriate product recommendation service to a target customer by searching for a customer similar to the target customer among existing customers without using customer's personal information.

According to the present disclosure, by providing services while collecting only minimal information about customers, it is possible to protect privacy of individual users, and provide a user with relevant, novelty, and benefit while cooperating safely and fairly between service providers without mutually sharing or integrating user (corporate user) data.

The effects of the present disclosure are not limited to those mentioned above, and other effects not mentioned can be clearly understood by those skilled in the art from the following description.

**Brief Description of Drawings**

FIG. 1 is a diagram illustrating a payment model and a user-centric payment model according to the related art.

FIG. 2 is a diagram illustrating an artificial intelligence model according to the related art and an artificial intelligence model according to an embodiment of the present disclosure.

FIG. 3 is a diagram illustrating a server for providing a product recommendation service using purchased product information according to an embodiment of the present disclosure.

FIG. 4 is a diagram illustrating a single-merchant and users according to the related art.

FIG. 5 is a diagram multi-merchant and users according to an embodiment of the present disclosure.

FIG. 6 is a diagram illustrating a user-centric artificial intelligence structure according to an embodiment of the present disclosure.

FIG. 7 is a diagram illustrating a product recommendation service scenario based on the user-centric artificial intelligence structure according to the embodiment of the present disclosure.

FIG. 8 is a diagram illustrating provision of a recommendation service using payment data according to an embodiment of the present disclosure.

FIGS. 9 and 10 are diagrams illustrating performance comparison results of a recommendation algorithm according to an embodiment of the present disclosure.

FIG. 11 is a diagram illustrating performance results of a matrix-based ECF (M-ECF) according to an embodiment of the present disclosure.

FIG. 12 is a diagram illustrating performance results of a vector-based ECF (M-ECF) according to an embodiment of the present disclosure.

FIG. 13 is a diagram illustrating preprocessed data according to an embodiment of the present disclosure.

FIG. 14 is a diagram illustrating Product2vec and user propensity vector generation according to an embodiment of the present disclosure.

FIG. 15 is a diagram illustrating product recommendation results according to an embodiment of the present disclosure.

FIG. 16 is a diagram illustrating a recommendation evaluation scenario according to an embodiment of the present disclosure.

FIG. 17 is a diagram illustrating a method of providing a product recommendation service using purchased product information according to an embodiment of the present disclosure.

**Mode for Invention**

The above-mentioned aspect, and other aspects, advantages, and features of the present disclosure and methods accomplishing them will become apparent from the following detailed description of exemplary embodiments with reference to the accompanying drawings.

However, the present disclosure may be modified in many different forms and it should not be limited to the exemplary embodiments set forth herein, and only the following embodiments are provided to easily inform those of ordinary skill in the art to which the present disclosure pertains the objects, configurations, and effects of the present disclosure, and the scope of the present disclosure is defined by the description of the claims.

Meanwhile, terms used in the present specification are for explaining exemplary embodiments rather than limiting the present disclosure. Unless otherwise stated, a singular form includes a plural form in the present specification. "Comprises" and/or "comprising" used in the present disclosure indicate(s) the presence of stated components, steps, operations, and/or elements but do(es) not exclude the presence or addition of one or more other components, steps, operations, and/or elements.

Hereinafter, in order to help the understanding of those skilled in the art, the background in which the present disclosure is proposed will be described first, and then embodiments of the present disclosure will be described.

In order for an artificial intelligence system to show good performance, learning through a lot of data is essential.

Many companies that provide artificial intelligence services transmit important personal information such as voice data and text data to cloud servers to collect a large amount of data, and are used to the transmitted data to improve the performance of artificial intelligence models.

AI speaker services developed by domestic companies are performing a task of recording users' conversations and converting the conversations into text for the purpose of improving the performance of the AI service.

This is to use user's voice data to increase a voice recognition rate. As subsidiaries were entrusted with the task of converting the recordings into text, third-party employees listen to the user's voice data, posing a serious threat to personal privacy Similarly, artificial intelligence assistant services also have concerns about infringing on personal information.

Various studies are being conducted to solve the trade-off relationship between the acquisition of user data and the protection of personal privacy. According to an embodiment of the present disclosure, AI services capable of protecting privacy of individual users, enabling collaboration that maximizes information protection of corporate (organizational) users, and achieving intended results are defined as user-centric AI services.

As a specific example of a user-centric artificial intelligence service according to an embodiment of the present disclosure, and the present disclosure provides a server and method for providing an appropriate product recommendation service to a target customer using purchase information of other customers with a high purchase similarity to the target customer, without using customer's personal information.

According to an embodiment of the present disclosure, product recommendation services are provided by using extrapolative collaborative filtering (ECF) that does not use user's personal information, uses only purchase information, and reflects and recommends purchase information of several stores in order to compensate for the lack of data from a single store perspective.

According to verification results described in detail below, by using only purchase information maintained for the performance of payment services without using personal information, it was confirmed that it is possible to recommend appropriate products without exposing information related to personal privacy and information of each store.

In addition, as a result of performing verification with data of a payment service provider according to the embodiment of the present disclosure, it was confirmed that an appropriate recommendation is possible even when the purchase information is used in natural language itself without categorizing a product name.

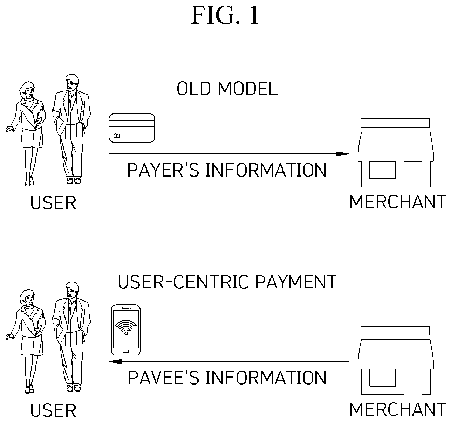

FIG. 1 is a diagram illustrating a payment model and a user-centric payment model according to the related art.

A main feature of a payment service provider server according to an embodiment of the present disclosure is that it provides a user-centric payment sharing platform-based service, and does not transmit financial information of a paying individual to affiliated stores.

That is, instead of a structure in which user's financial information is transmitted to an affiliated store and connected from an affiliated store's system to a financial institution as in the related art, an affiliated store's ID is transmitted to a user's system and a payment service is processed in a user's system (e.g., smartphone), so payment may be made without intermediary intervention between a paying user and a financial institution. As a result, the user's personal information is not unnecessarily transmitted to service providers, but rather, service providers' information is accumulated in the user's system, so a basis for user-centric services is generated.

The user-centric payment service not only reduces VAN and PG company commissions from the service provider perspective without intermediary intervention, but makes it possible for customers to reduce the risk of leakage of personal information.

In addition, from the service provider perspective, the burden of commissions may be reduced, and from the customer perspective, convenience increases as complex payment is possible in which payment, membership, etc., may be processed at once.

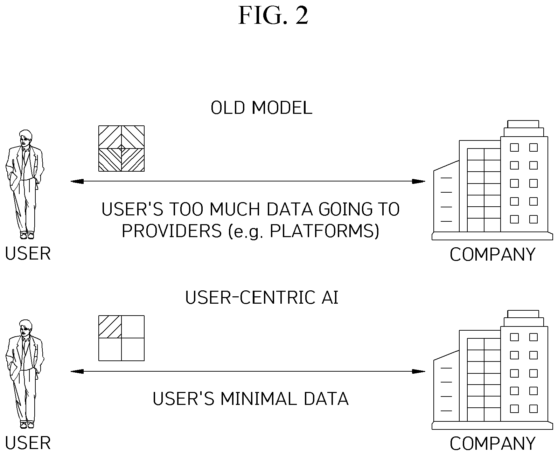

FIG. 2 is a diagram illustrating an artificial intelligence model according to the related art and an artificial intelligence model according to an embodiment of the present disclosure.

The payment service provider according to an embodiment of the present disclosure proposes a user-centric artificial intelligence structure by extending the above-described user-centric payment.

According to an embodiment of the present disclosure, it helps companies to accumulate users' information to a minimum (personal information is not accumulated, and only product purchase history information is accumulated to provide product recommendation services to eliminate the possibility of invasion of personal privacy), and helps companies to provide high-performance AI-based services without directly sharing their customer information with other companies.

That is, as illustrated in FIG. 2, the artificial intelligence model structure according to the related art transmits the entire data of a user to the company, and the company provides services by upgrading an algorithm through the entire data, while the user-centric artificial intelligence model structure according to the embodiment of the present disclosure can provide appropriate services (e.g., product recommendation service) to the user using only a minimum amount of data.

In other words, according to an embodiment of the present disclosure, it is possible to protect privacy of individual users even with minimal information (privacy preserving), and provide relevant, novel, and beneficial services while safely mutually utilizing data of service providers (corporate users) (secure collaboration).

From the service provider (corporate users) perspective, it is possible to provide services to individual users without directly sharing data between companies, and it is possible for general users to receive services that are relevant to individuals while maintaining privacy.

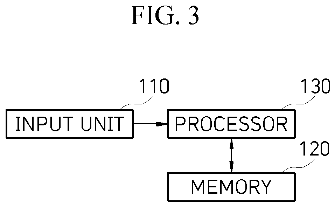

FIG. 3 is a diagram illustrating a server for providing a product recommendation service using purchased product information according to an embodiment of the present disclosure.

According to an embodiment of the present disclosure, for example, when customer A wants to make a purchase in a shopping mall, the shopping mall does not utilize customer A's personal information (gender, age, occupation, etc.) during recommending a new product to customer A, but search for customers similar to customer A using only purchase information.

In this case, customer B with a similar purchasing pattern is inquired by considering a product purchased by customer A, the number of times of purchases, purchase date and location, etc., and a product that customer A did not purchase among the products purchased by customer B is recommended.

According to an embodiment of the present disclosure, the recommendation service is provided by using only purchase information without using personal information of a user (general user) through the extrapolative collaborative filtering (ECF).

According to an embodiment of the present disclosure, product recommendation information is provided using location information and time information where a target customer is currently located.

For example, in the case of a coffee shop of company A that a target customer visits for the first time, by considering purchase histories of other customers similar to the target customer's propensity using purchase information from other coffee shops (company B, C, etc.) that the target customer has previously used and purchase information of other customers at other coffee shops, the target customer is recommended a product that is expected to be highly satisfactory among the products of the coffee shop of company A.

In addition, in calculating the similarity, it is possible to understand propensity only for the target customer in consideration of purchase time information of the target customer.

For example, it is presumed that the target customer has a history of commuting to and from work and mainly purchasing a cup of iced Americano at a coffee shop during the week, and a history of purchasing a cup of iced Americano and a cup of iced green tea latte at a coffee shop with his/her spouse on the weekend.

If so, it is presumed that the iced Americano is a beverage mainly consumed by the target customer, and the iced green tea latte is a beverage mainly consumed by a companion (e.g., spouse, friend, etc.), not the target customer.

Therefore, considering the time information (including date) that the target customer currently wants to place an order, according to the above case, it is possible to propose coffee (e.g., iced Americano) as a recommended product at a coffee shop of company A during the week, and it is possible to suggest recommended products (coffee, iced Americano) for target customers and recommended products (non-coffee types, green tea latte, sweet potato latte, etc.) for companion customers at a coffee shop of company A.

In other words, since the purchase information may be considered to include the target customer's propensity but not all purchased products may be used by the target customer, it is possible to distinguish and propose recommended products not only for the target customer, but also for a companion accompanying the target customer by comprehensively considering the date, time, and location while inquiring about similar customers using a purchase history and proposing recommended products.

The server for providing a product recommendation service by using purchased product information according to the present disclosure comprises: an input unit 110 for collecting purchase information for each user; a memory 120 in which a program for generating recommended product information for a target customer by using the purchase information for each user is stored; and a processor 130 for executing the program, wherein the processor 130 inquires about other customers with a purchase propensity similar to that of the target customer, and generates recommended product information to be recommended to the target customer in consideration of purchased products of other customers.

The purchase information for each user includes purchased product, purchase destination, purchase time, and purchase location information.

The processor 130 inquires about other customers with similar purchase propensity using an extrapolative collaborative filtering algorithm for purchase information from a plurality of merchants.

The processor 130 builds a matrix for purchase information for each user, inquires about other customers through cosine similarity based on a target customer, and recommends products purchased by other customers.

The processor 130 detects a degree of similarity using vector-based extrapolative collaborative filtering and generates recommended product information.

The processor 130 learns the purchase information for each user as a sentence, obtains Product2vec obtained by vectorizing purchased product details, multiplies a product vector to generate a user purchase propensity vector, and inquires about other customers with similar purchase propensity.

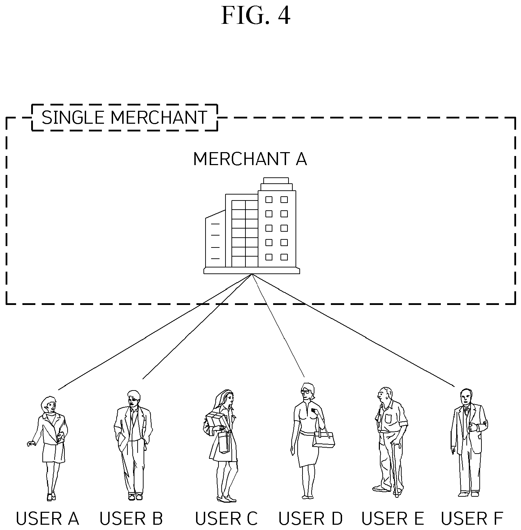

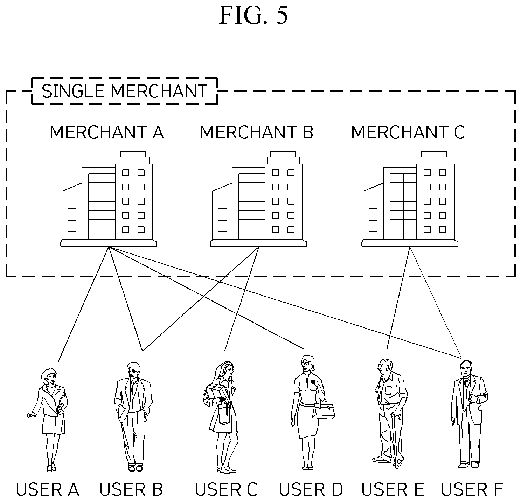

FIG. 4 illustrates a single-merchant and users according to the related art, and FIG. 5 illustrates multi-merchant and users according to an embodiment of the present disclosure.

Referring to FIG. 4, from the single-merchant perspective, our company provides a recommendation service with only our purchase information, so it is difficult to provide appropriate recommendation services to users who visit our company for the first time. In order to provide the recommendation service, similar users should be searched using user's personal information, and the recommendation service should be provided using the searched user's purchase history.

On the other hand, from the multi-merchant perspective of FIG. 5, even if a user visits our company for the first time, it is possible to search for similar users in other stores without using personal information by reflecting purchase information from other stores and provide a recommendation service.

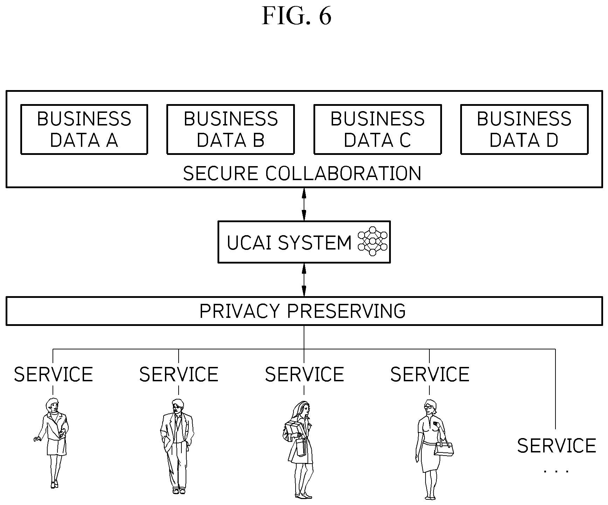

FIG. 6 is a diagram illustrating a user-centric artificial intelligence structure according to an embodiment of the present disclosure.

As described above, by safely mutually using business data, that is, data of service providers (corporate users) and using only purchase information without using personal information of individual users, it is possible to protect privacy and provide relevant, novel, and beneficial services.

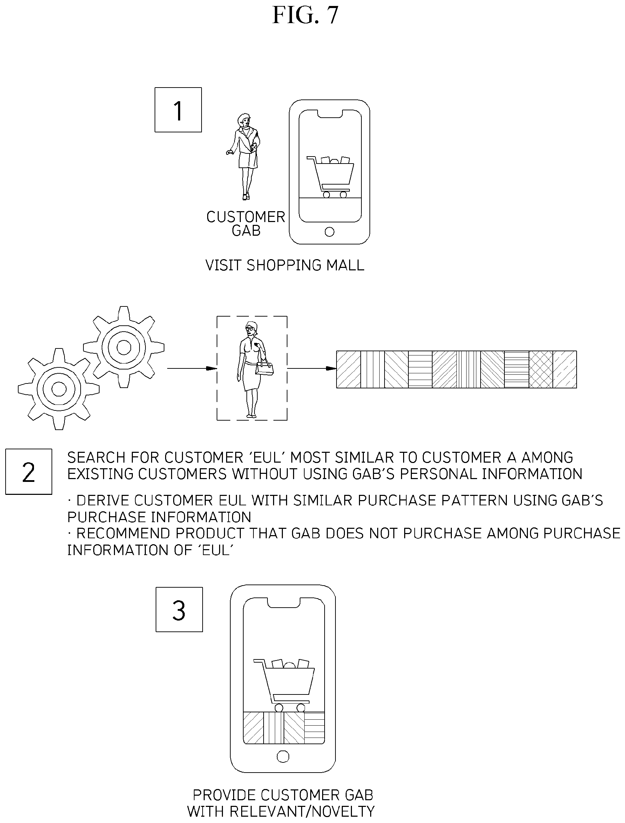

FIG. 7 is a diagram illustrating a product recommendation service scenario based on the user-centric artificial intelligence structure according to the embodiment of the present disclosure.

According to an embodiment of the present disclosure, for example, when customer A wants to make a purchase in a shopping mall, the shopping mall does not utilize customer gab's personal information (gender, age, occupation, etc.) during recommending a new product to customer gab, but search for customers similar to customer gab using only purchase information.

In this case, customer eul with a similar purchasing pattern is inquired by considering a product purchased by customer gab, the number of times of purchases, purchase date and location, etc., and a product that customer A did not purchase among the products purchased by customer eul is recommended.

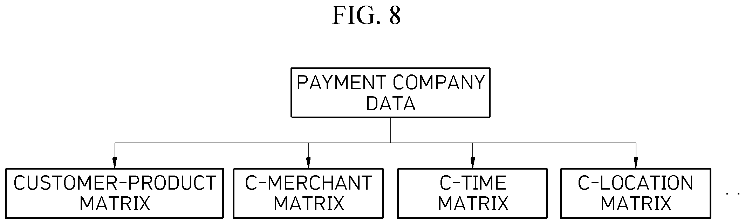

FIG. 8 is a diagram illustrating provision of a recommendation service using payment data (purchase information) according to an embodiment of the present disclosure.

According to an embodiment of the present disclosure, in order to protect user's (general user's) privacy, personal information (gender, age, etc.) is not used, and only purchase information is used as minimal information.

The purchase information includes purchased product, purchase destination, purchase time, and purchase location information. The purchase information is built into a matrix to search for similar users and generate a recommendation list using products purchased by similar users (In this case, the recommendation list may include top 5, top 10, and top 20 products).

According to an embodiment of the present disclosure, in order to compensate for the insufficient data situation in a single store, it proposes a recommendation method using purchase information from other stores, solves limitations of single merchants such as new user problems (cold-star), and uses purchase information through extrapolative collaborative filtering (ECF) to enable merchant preference pattern analysis of users (general users) using various merchant groups.

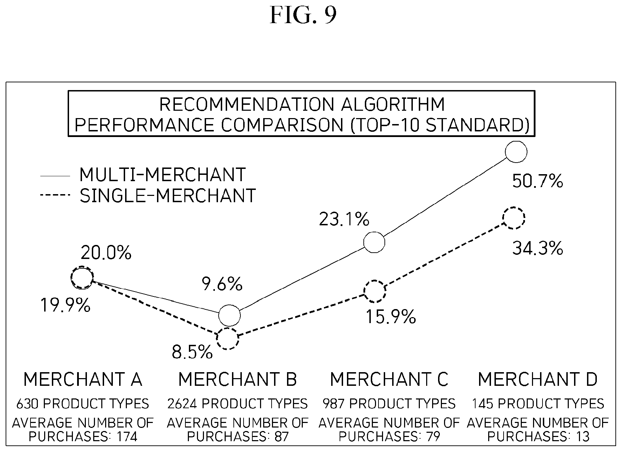

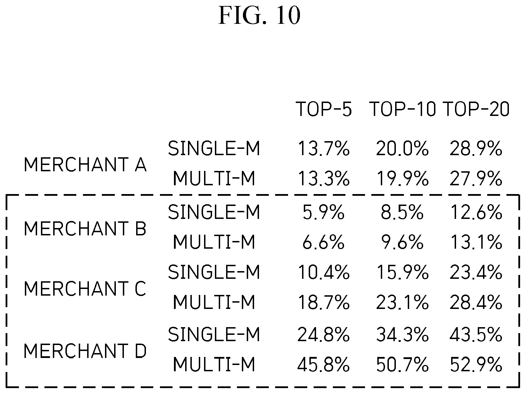

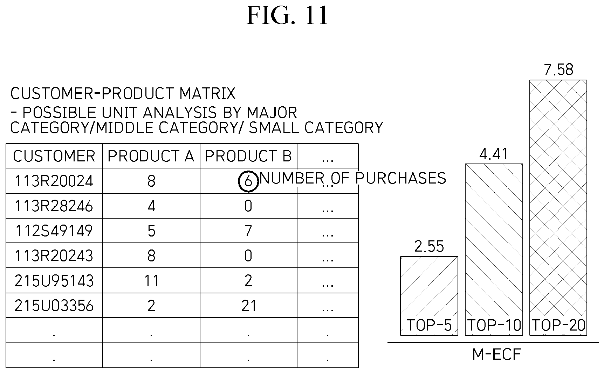

FIGS. 9 and 10 illustrate performance comparison results of recommendation algorithms according to an embodiment of the present disclosure, and FIG. 11 illustrates performance results of matrix-based ECF (M-ECF) according to an embodiment of the present disclosure.

From the multi-merchant perspective, the performance of the above-described extrapolative collaborative filtering algorithm was verified by using, as experimental data, payment data, which can identify purchase information from various stores.

Users with various merchant purchase histories were extracted from the published Raw-Data for algorithm development, and purchase information (purchase product, purchase store, purchase time and location) for each user, which is essential information for purchase, exchange, and refund, was utilized to build a dataset, and other personal information is not used.

To verify the performance of the extrapolative collaborative filtering algorithm, it was assumed that there were standardized categories for products handled by each merchant, and recommendation performance was evaluated with matrix ECF (M-ECF) implemented based on standardized codes.

Referring to FIG. 11, a user purchase information dataset is built into a matrix in which standardized product categories become one column, and then, similarity to other users is derived through cosine similarity based on a user to search for similar users and recommend products purchased by the similar users.

According to a method of evaluating prediction accuracy for a recommended product, a last product is separated as a label value from a list of products purchased by each user in advance and is compared with a finally recommended product to evaluate the prediction accuracy. Here, the method for calculating prediction accuracy is as shown in [Equation 1]

$$[\text{Equation 1}]$$

$$\text{Acc} = \frac{Number\ of\ matched\ users}{Number\ of\ recommended\ users} \times 100$$

The extrapolative collaborative filtering algorithm developed through open payment data was applied to the actual payment history data to empirically verify whether the extrapolative collaborative filtering algorithm has appropriate recommendation results.

FIGS. 9 and 10 illustrate the results of comparative evaluation of the matrix-based extrapolative collaborative filtering algorithm from the single-merchant perspective and the multi-merchant perspective. From the single-merchant perspective, recommendations were made to each merchant A, B, C, and D using only our company's user purchase information and from the multi-merchant perspective, recommendations were made to merchants A, B, C, and D using all user purchase information.

As a result, there was no significant difference between merchants A and B who had a lot of product types and a lot of purchase data, whereas for merchants C and D who had little purchase data, the extrapolative collaborative filtering algorithm showed higher prediction accuracy than that of the single-merchant.

In other words, large companies with a lot of purchase information show sufficient recommendation performance with our company's data, but small and medium-sized companies do not have enough data to make recommendations, so it was confirmed that the extrapolative collaborative filtering algorithm was effective as a result of using purchase information from other stores.

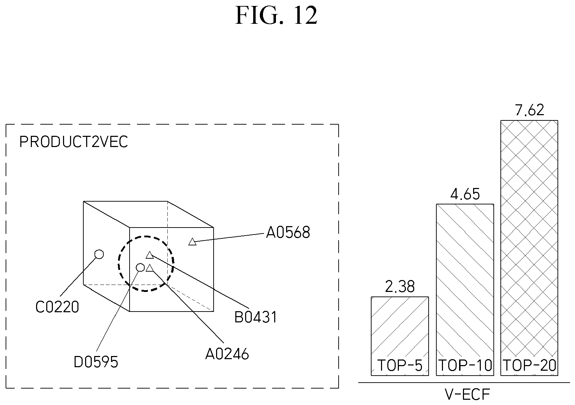

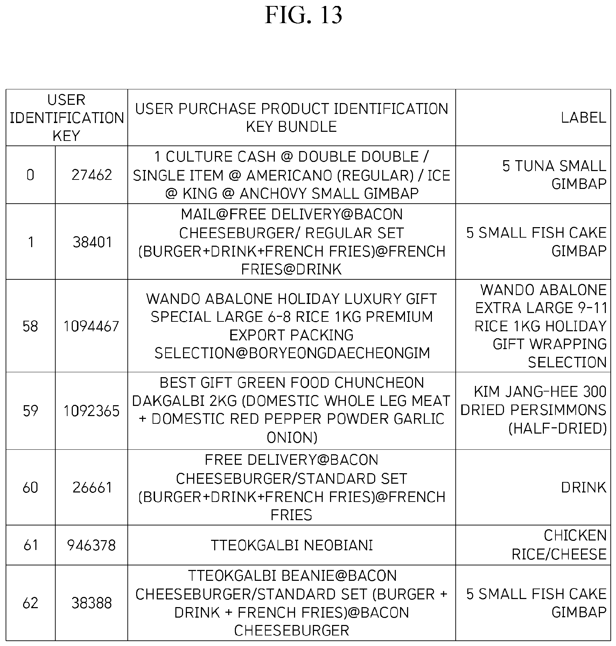

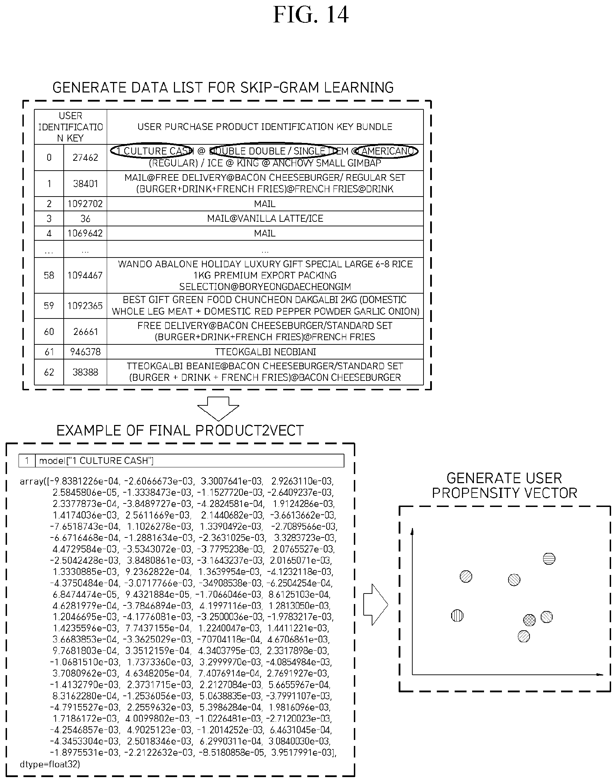

FIG. 12 is a diagram illustrating performance results of a vector-based ECF (M-ECF) according to an embodiment of the present disclosure, FIG. 13 is a diagram illustrating preprocessed data according to an embodiment of the present disclosure, and FIG. 14 is a diagram illustrating Product2vec and user propensity vector generation according to an embodiment of the present disclosure.

Referring to FIG. 13, excluding null values in product names (product name 1, product name 2, and product name 3 are all considered), in the case of a product purchased only once, a model is not properly trained, so the product purchased only once is excluded.

To confirm the recommendation result, the last product is the label value for performance evaluation, so the minimum number of times of purchases should be twice or more.

A product list (user purchased product identification key bundle) is generated for each user.

Referring to FIG. 12, vector-based extrapolative collaborative filtering (V-ECF) is used so that natural language may be used and processed as it is.

According to an embodiment of the present disclosure, a product purchased by a user is set as a word through a skip-gram technique using a Word2vec model, and a list of purchased products is trained as a sentence.

That is, the actual purchased product details are vectorized, which is defined as Purchased Product to Vec.

The Proudct2vec generated in this way is multiplied by each product vector purchased by a user to generate a user purchase propensity vector, and similar users are searched through similarity calculation.

According to an embodiment of the present disclosure, by using a recommendation algorithm in natural language itself without categorizing product purchase information of a user, it is possible to directly reflect a newly appearing product to a recommendation algorithm without a separate classification process.

In addition, from the multi-merchant perspective, the process of categorizing product names that do not match for each merchant is unnecessary, and furthermore, it is possible to automatically reflect products of global merchants used in different languages to the recommendation algorithm.

Hereinafter, confirming the results of comparing the matrix-based extrapolative collaborative filtering and vector-based extrapolative collaborative filtering in [Table 1], similar recommendation prediction accuracy is confirmed.

[Table 1]

| Divison | M-ECF | V-ECF |
|---------|-------|-------|
| Top-5 | 2.55% | 2.38% |
| Top-10 | 4.41% | 4.65% |
| Top-20 | 7.58% | 7.62% |

In the case of the vector-based extrapolative collaborative filtering, product purchase information is processed in natural language itself without processed, so it is possible to reflect the product purchase information in the recommendation algorithm without human judgment or intervention.

In addition, as described above, in the case of the multi-merchant where various products newly appear, product names among other merchants do not match. Compared to the matrix-based extrapolative collaborative filtering, which requires separate processing of product information, it can be confirmed that the performance of the vector-based extrapolative collaborative filtering is secured.

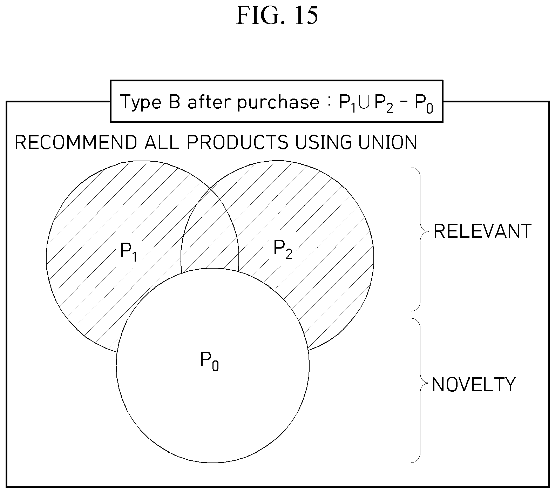

FIG. 15 is a diagram illustrating product recommendation results according to an embodiment of the present disclosure.

When P1 is defined as a product purchased by a similar user, P2 is defined as a product with a high similarity to a product just purchased by a target customer (customer gab and customer A described above), and P0 is defined as a product purchased in the past by the target customer (customer gab and customer A described above), the result of subtracting P0 from the union of P1 and P2 is recommended.

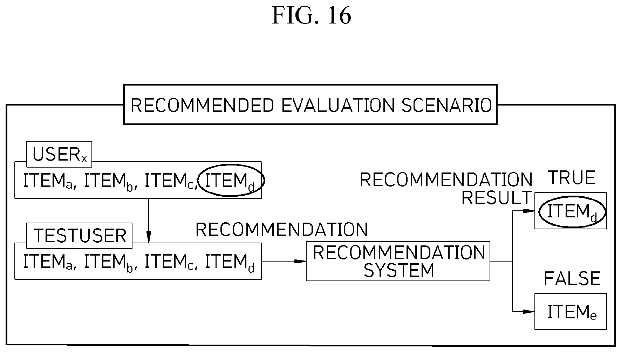

FIG. 16 is a diagram illustrating a recommendation evaluation scenario according to an embodiment of the present disclosure.

The number of times of purchases is different for each user. A test user is generated by removing the last product from among products actually purchased by the user, and a user most similar to a new user (target user) is searched through similarity calculation.

Excluding common purchase products of users similar to the target user, products purchased the most by similar users are recommended as top 5, 10, and 20, and when the target user purchases the recommended products, it is determined to be an appropriate recommendation.

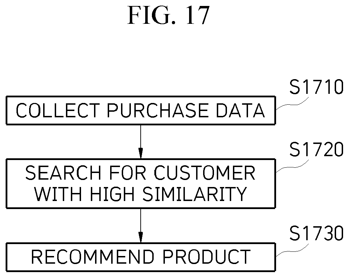

FIG. 17 is a diagram illustrating a method of providing a product recommendation service using purchased product information according to an embodiment of the present disclosure.

A method of providing a product recommendation service using purchased product information according to an embodiment of the present disclosure includes: collecting purchase data according to purchase completion from a plurality of merchants (S1710); searching for other customers with a high similarity to a purchase propensity of a target customer using the purchase data (S1720); and recommending a product to the target customer using the purchased product information of the other customer (S1730).

In step S1710, the purchase data including purchased product, purchase destination, purchase time, and purchase location information is collected.

In S1720, other customers are searched using the extrapolative collaborative filtering algorithm.

In S1720, a matrix is built for each user's purchase information, and other customers with a high purchase propensity similarity are searched for based on the target customer.

In S1720, other customers are searched using the vector-based extrapolative collaborative filtering algorithm.

in S1720, the purchase data is learned as a sentence to obtain Proudct2vec obtained by vectorizing purchased product details and the other customers are searched by multiplying product vectors to generate a user purchase propensity vector.

Meanwhile, the method for providing a product recommendation service using purchased product information according to an embodiment of the present disclosure may be implemented on a computer or recorded in a recording medium. The computer system may include at least one processor, a memory, a user input device, a data communication bus, a user output device, and storage. Each of the above-described components performs data communication through a data communication bus.

The computer system may further include a network interface coupled to the network. The processor may be a central processing unit (CPU) or a semiconductor device that processes instructions stored in a memory and/or storage.

The memory and storage may include various types of volatile or non-volatile storage media. For example, the memory may include a ROM and a RAM.

Therefore, the method for providing a product recommendation service using purchased product information according to an embodiment of the present disclosure may be implemented as a method executable on a computer. When the method for providing product recommendation service using purchased product information according to an embodiment of the present disclosure is performed in a computer device, computer readable instructions may perform the method for providing product recommendation service using purchased product information according to the present disclosure.

Meanwhile, the above-described method for providing product recommendation service using purchased product information according to the present disclosure can be implemented as computer readable codes on a computer readable recording medium. The computer-readable recording medium may include all kinds of recording media in which data that may be read by a computer system are stored. For example, there may be the ROM, the RAM, a magnetic tape, a magnetic disk, a flash memory, an optical data storage device, and the like. In addition, the computer-readable recording medium may be distributed in computer systems connected through a computer communication network, and stored and executed as readable codes in a distributed manner.

**Claims**

1. A server for providing a product recommendation service using purchased product information, the server comprising:

   an input unit for collecting purchase information for each user;
   a memory in which a program for generating recommended product information for a target customer by using the purchase information for each user is stored; and
   a processor executing the program,
   wherein the processor inquires about other customers with a purchase propensity similar to that of the target customer, and generates the recommended product information to be recommended to the target customer in consideration of purchased products of other customers.

2. The server of claim 1, wherein the purchase information for each user includes purchased product, purchase destination, purchase time, and purchase location information.

3. The server of claim 1, wherein the processor inquires about other customers with similar purchase propensity by using an extrapolative collaborative filtering algorithm for the purchase information from a plurality of merchants.

4. The server of claim 3, wherein the processor builds a matrix for the purchase information for each user, inquires about the other customers through a cosine similarity based on the target customer, and recommends products purchased by the other customers.

5. The server of claim 3, wherein the processor generates the recommended product information by detecting a similarity using vector-based extrapolative collaborative filtering.

6. The server of claim 5, wherein the processor learns the purchase information for each user as a sentence, obtains Product2vec obtained by vectorizing purchased product details, multiplies a product vector to generate a user purchase propensity vector, and inquires about other customers with similar purchase propensity.

7. A method of providing a product recommendation service using purchased product information, the method comprising:

   (a) collecting purchase data according to purchase completion from a plurality of merchants;
   (b) searching for other customers with a high similarity to a purchase propensity of a target customer using the purchase data; and
   (c) recommending a product to the target customer using the purchased product information of the other customer.

8. The method of claim 7, wherein, in (a), the purchase data including purchased product, purchase destination, purchase time, and purchase location information is collected.

9. The method of claim 7, wherein, in (b), the other customers are searched using an extrapolative collaborative filtering algorithm.

10. The method of claim 9, wherein, in step (b), a matrix is built for the purchase information for each user and the other customers with a high similarity to the purchase propensity are searched based on the target customer.

**11.** The method of claim 9, wherein, in (b), the other customers are searched using a vector-based extrapolative collaborative filtering algorithm.

**12.** The method of claim 11, wherein, in (b), the purchase data is learned as a sentence to obtain Proudct2vec obtained by vectorizing purchased product details and the other customers are searched by multiplying product vectors to generate a user purchase propensity vector.

# FIG. 1

OLD MODEL

PAYER'S INFORMATION →

USER                    MERCHANT

USER-CENTRIC PAYMENT

← PAVEE'S INFORMATION

USER                    MERCHANT

# FIG. 2

OLD MODEL

USER

USER'S TOO MUCH DATA GOING TO
PROVIDERS (e.g. PLATFORMS)

COMPANY

USER-CENTRIC AI

USER

USER'S MINIMAL DATA

COMPANY

FIG. 3

110             130

| INPUT UNIT | → | PROCESSOR |

120

| MEMORY |

# FIG. 4

SINGLE MERCHANT

MERCHANT A

USER A USER B USER C USER D USER E USER F

# FIG. 5

SINGLE MERCHANT

MERCHANT A    MERCHANT B    MERCHANT C

USER A    USER B    USER C    USER D    USER E    USER F

# FIG. 6

# FIG. 7

1

CUSTOMER
GAB

VISIT SHOPPING MALL

2 SEARCH FOR CUSTOMER 'EUL' MOST SIMILAR TO CUSTOMER A AMONG
EXISTING CUSTOMERS WITHOUT USING GAB'S PERSONAL INFORMATION

· DERIVE CUSTOMER EUL WITH SIMILAR PURCHASE PATTERN USING GAB'S
PURCHASE INFORMATION
· RECOMMEND PRODUCT THAT GAB DOES NOT PURCHASE AMONG PURCHASE
INFORMATION OF 'EUL'

3

PROVIDE CUSTOMER GAB
WITH RELEVANT/NOVELTY

FIG. 8

```
                    ┌─────────────────────┐
                    │  PAYMENT COMPANY    │
                    │       DATA          │
                    └─────────────────────┘
                               │
      ┌────────────┬───────────┼───────────┬────────────┐
      ▼            ▼           ▼           ▼
┌──────────────┐ ┌──────────┐ ┌────────┐ ┌────────────┐
│CUSTOMER-PRODUCT│ │C-MERCHANT│ │ C-TIME │ │ C-LOCATION │  . .
│   MATRIX      │ │  MATRIX  │ │ MATRIX │ │  MATRIX    │
└──────────────┘ └──────────┘ └────────┘ └────────────┘
```

FIG. 9

RECOMMENDATION ALGORITHM
PERFORMANCE COMPARISON (TOP-10 STANDARD)

—— MULTI-MERCHANT
----- SINGLE-MERCHANT

50.7%

23.1%

20.0%

9.6%

34.3%

19.9%

15.9%

8.5%

| MERCHANT A | MERCHANT B | MERCHANT C | MERCHANT D |
|---|---|---|---|
| 630 PRODUCT TYPES | 2624 PRODUCT TYPES | 987 PRODUCT TYPES | 145 PRODUCT TYPES |
| AVERAGE NUMBER OF PURCHASES: 174 | AVERAGE NUMBER OF PURCHASES: 87 | AVERAGE NUMBER OF PURCHASES: 79 | AVERAGE NUMBER OF PURCHASES: 13 |

FIG. 10

|  |  | TOP-5 | TOP-10 | TOP-20 |
|---|---|---|---|---|
| MERCHANT A | SINGLE-M | 13.7% | 20.0% | 28.9% |
|  | MULTI-M | 13.3% | 19.9% | 27.9% |
| MERCHANT B | SINGLE-M | 5.9% | 8.5% | 12.6% |
|  | MULTI-M | 6.6% | 9.6% | 13.1% |
| MERCHANT C | SINGLE-M | 10.4% | 15.9% | 23.4% |
|  | MULTI-M | 18.7% | 23.1% | 28.4% |
| MERCHANT D | SINGLE-M | 24.8% | 34.3% | 43.5% |
|  | MULTI-M | 45.8% | 50.7% | 52.9% |

# FIG. 11

CUSTOMER-PRODUCT MATRIX
- POSSIBLE UNIT ANALYSIS BY MAJOR
CATEGORY/MIDDLE CATEGORY/ SMALL CATEGORY

| CUSTOMER | PRODUCT A | PRODUCT B | ... |
|---|---|---|---|
| 113R20024 | 8 | 6 | ... |
| 113R28246 | 4 | 0 | ... |
| 112S49149 | 5 | 7 | ... |
| 113R20243 | 8 | 0 | ... |
| 215U95143 | 11 | 2 | ... |
| 215U03356 | 2 | 21 | ... |
| . | . | . | . |
| . | . | . | . |

NUMBER OF PURCHASES

7.58

4.41

2.55

| TOP-5 | TOP-10 | TOP-20 |

M-ECF

# FIG. 12

# FIG. 13

| USER IDENTIFICATION KEY | | USER PURCHASE PRODUCT IDENTIFICATION KEY BUNDLE | LABEL |
|---|---|---|---|
| 0 | 27462 | 1 CULTURE CASH @ DOUBLE DOUBLE / SINGLE ITEM @ AMERICANO (REGULAR) / ICE @ KING @ ANCHOVY SMALL GIMBAP | 5 TUNA SMALL GIMBAP |
| 1 | 38401 | MAIL@FREE DELIVERY@BACON CHEESEBURGER/ REGULAR SET (BURGER+DRINK+FRENCH FRIES)@FRENCH FRIES@DRINK | 5 SMALL FISH CAKE GIMBAP |
| 58 | 1094467 | WANDO ABALONE HOLIDAY LUXURY GIFT SPECIAL LARGE 6-8 RICE 1KG PREMIUM EXPORT PACKING SELECTION@BORYEONGDAECHEONGIM | WANDO ABALONE EXTRA LARGE 9-11 RICE 1KG HOLIDAY GIFT WRAPPING SELECTION |
| 59 | 1092365 | BEST GIFT GREEN FOOD CHUNCHEON DAKGALBI 2KG (DOMESTIC WHOLE LEG MEAT + DOMESTIC RED PEPPER POWDER GARLIC ONION) | KIM JANG-HEE 300 DRIED PERSIMMONS (HALF-DRIED) |
| 60 | 26661 | FREE DELIVERY@BACON CHEESEBURGER/STANDARD SET (BURGER+DRINK+FRENCH FRIES)@FRENCH FRIES | DRINK |
| 61 | 946378 | TTEOKGALBI NEOBIANI | CHICKEN RICE/CHEESE |
| 62 | 38388 | TTEOKGALBI BEANIE@BACON CHEESEBURGER/STANDARD SET (BURGER + DRINK + FRENCH FRIES)@BACON CHEESEBURGER | 5 SMALL FISH CAKE GIMBAP |

# FIG. 14

GENERATE DATA LIST FOR SKIP-GRAM LEARNING

| USER IDENTIFICATION KEY | | USER PURCHASE PRODUCT IDENTIFICATION KEY BUNDLE |
|---|---|---|
| 0 | 27462 | 1 CULTURE CASH @ DOUBLE DOUBLE / SINGLE ITEM @ AMERICANO (REGULAR) / ICE @ KING @ ANCHOVY SMALL GIMBAP |
| 1 | 38401 | MAIL@FREE DELIVERY@BACON CHEESEBURGER/ REGULAR SET (BURGER+DRINK+FRENCH FRIES)@FRENCH FRIES@DRINK |
| 2 | 1092702 | MAIL |
| 3 | 36 | MAIL@VANILLA LATTE/ICE |
| 4 | 1069642 | MAIL |
| ... | ... | ... |
| 58 | 1094467 | WANDO ABALONE HOLIDAY LUXURY GIFT SPECIAL LARGE 6-8 RICE 1KG PREMIUM EXPORT PACKING SELECTION@BORYEONGDAECHEONGIM |
| 59 | 1092365 | BEST GIFT GREEN FOOD CHUNCHEON DAKGALBI 2KG (DOMESTIC WHOLE LEG MEAT + DOMESTIC RED PEPPER POWDER GARLIC ONION) |
| 60 | 26661 | FREE DELIVERY@BACON CHEESEBURGER/STANDARD SET (BURGER+DRINK+FRENCH FRIES)@FRENCH FRIES |
| 61 | 946378 | TTEOKGALBI NEOBIANI |
| 62 | 38388 | TTEOKGALBI BEANIE@BACON CHEESEBURGER/STANDARD SET (BURGER + DRINK + FRENCH FRIES)@BACON CHEESEBURGER |

EXAMPLE OF FINAL PRODUCT2VECT

```
1  model["1 CULTURE CASH"]

array([-9.8381226e-04, -2.6066673e-03,  3.3007641e-03,  2.9263110e-03,
        2.5845806e-05, -1.3338473e-03, -1.1527720e-03, -2.6409237e-03,
        2.3377873e-04, -3.8489727e-03, -4.2824581e-04,  1.9124286e-03,
        1.4174036e-03,  2.5611669e-03,  2.1440682e-03, -3.6613662e-03,
       -7.6518743e-04,  1.1026278e-03,  1.3390492e-03, -2.7089566e-03,
       -6.6716468e-04, -1.2881634e-03, -2.3631025e-03,  3.3283723e-03,
        4.4729584e-03, -3.5343072e-03, -3.7795238e-03,  2.0765527e-03,
       -2.5042428e-03,  3.8480861e-03, -3.1643237e-03,  2.0165071e-03,
        1.3330885e-03,  9.2362822e-04,  1.3639954e-03, -4.1232118e-03,
       -4.3750484e-04, -3.0717766e-03, -34908538e-03, -6.2504254e-04,
        6.8474474e-05,  9.4321884e-05, -1.7066046e-03,  8.6125103e-04,
        4.6281979e-04, -3.7846894e-03,  4.1997116e-03,  1.2813050e-03,
        1.2046695e-03, -4.1776081e-03, -3.2500036e-03, -1.9783217e-03,
        1.4235596e-03,  7.7437155e-04,  1.2240047e-03,  1.4411221e-03,
        3.6683853e-04, -3.3625029e-03, -70704118e-04,  4.6706861e-03,
        9.7681803e-04,  3.3512159e-04,  4.3403795e-03,  2.3317898e-03,
       -1.0681510e-03,  1.7373360e-03,  3.2999970e-03, -4.0854984e-03,
        3.7080962e-03,  4.6348205e-04,  7.4076914e-04,  2.7691927e-03,
       -1.4132790e-03,  2.3731715e-03,  2.2127084e-03,  5.6655967e-04,
        8.3162280e-04, -1.2536056e-03,  5.0638835e-03, -3.7991107e-03,
       -4.7915527e-03,  2.2559632e-03,  5.3986284e-04,  1.9816096e-03,
        1.7186172e-03,  4.0099802e-03, -1.0226481e-03, -2.7120023e-03,
       -4.2546857e-03,  4.9025123e-03, -1.2014252e-03,  6.4631045e-04,
       -4.3453304e-03,  2.5018346e-03,  6.2990311e-04,  3.0840030e-03,
       -1.8975531e-03, -2.2122632e-03, -8.5180858e-05,  3.9517991e-03],
      dtype=float32)
```

GENERATE USER PROPENSITY VECTOR

# FIG. 15

Type B after purchase : $P_1 \cup P_2 - P_0$

RECOMMEND ALL PRODUCTS USING UNION

$P_1$

$P_2$

$P_0$

RELEVANT

NOVELTY

## FIG. 16

FIG. 17

COLLECT PURCHASE DATA — S1710

SEARCH FOR CUSTOMER
WITH HIGH SIMILARITY — S1720

RECOMMEND PRODUCT — S1730

## INTERNATIONAL SEARCH REPORT

| International application No. |
| --- |
| **PCT/KR2021/019344** |

### A. CLASSIFICATION OF SUBJECT MATTER

**H04N 21/466**(2011.01)i; **G06N 3/08**(2006.01)i; **G06N 3/04**(2006.01)i

According to International Patent Classification (IPC) or to both national classification and IPC

### B. FIELDS SEARCHED

Minimum documentation searched (classification system followed by classification symbols)

H04N 21/466(2011.01); G06N 20/00(2019.01); G06N 3/02(2006.01); G06Q 30/02(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 타겟 고객(target customer), 구매 정보(purchase information), 구매 성향(purchase tendencies), 추천 상품 정보(recommended product information), 코사인 유사도(cosine similarity)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2164814 B1 (DONG-EUI UNIVERSITY INDUSTRY-ACADEMIC COOPERATION FOUNDATION) 13 October 2020 (2020-10-13)<br>See paragraphs [0009] and [0108]. | 1-12 |
| Y | LIFTIGNITER.COM. Evaluating Collaborative Filtering and Recommender Systems. 11 February 2020 [ Retrieved on 28 March 2022]. Retrieved from <URL: https://www.liftigniter.com/blog/evaluating-collaborative-filtering-and-recommender-systems>.<br>See pages 1-2. | 1-12 |
| Y | VASILE, Flavian et al. Meta-Prod2Vec: Product Embeddings Using Side-Information for Recommendation. arXiv:1607.07326v1. pp. 1-8, 25 July 2016 [Retrieved on 28 March 2022]. Retrieved from <URL: https://arxiv.org/pdf/1607.07326.pdf>.<br>See pages 2 and 5. | 4,6,10,12 |
| A | KR 10-1494281 B1 (MOCULUS CO., LTD.) 25 February 2015 (2015-02-25)<br>See paragraph [0063]; and claim 1. | 1-12 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 April 2022** | **14 April 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2021/019344** |

**C.      DOCUMENTS CONSIDERED TO BE RELEVANT**

| Category* | Citation of document, with indication, where appropriate, of the relevant passages | Relevant to claim No. |
|---|---|---|
| A | KR 10-2020-0108058 A (OCADO INNOVATION LIMITED) 16 September 2020 (2020-09-16)<br>See claim 1. | 1-12 |

Form PCT/ISA/210 (second sheet) (July 2019)

INTERNATIONAL SEARCH REPORT
Information on patent family members

International application No.

**PCT/KR2021/019344**

| Patent document cited in search report | | | Publication date (day/month/year) | Patent family member(s) | | | Publication date (day/month/year) |
|---|---|---|---|---|---|---|---|
| KR | 10-2164814 | B1 | 13 October 2020 | KR | 10-2020-0103202 | A | 02 September 2020 |
| KR | 10-1494281 | B1 | 25 February 2015 | KR | 10-2014-0141769 | A | 11 December 2014 |
| | | | | WO | 2014-193111 | A1 | 04 December 2014 |
| KR | 10-2020-0108058 | A | 16 September 2020 | AU | 2020-211047 | A1 | 02 July 2020 |
| | | | | JP | 2021-511611 | A | 06 May 2021 |
| | | | | US | 2021-0035188 | A1 | 04 February 2021 |
| | | | | WO | 2019-145395 | A1 | 01 August 2019 |

Form PCT/ISA/210 (patent family annex) (July 2019)